# EUROPÄISCHE PATENTSCHRIFT

(11) **EP 2 638 598 B1**
(45) Veröffentlichungstag und Bekanntmachung des Hinweises auf die Patenterteilung: **10.06.2015**
(21) Anmeldenummer: 11782045.6
(22) Anmeldetag: 28.10.2011
(51) Int. Cl.: H01M 10/48, A62C 3/16, A62C 37/00

(54) **VERFAHREN UND VORRICHTUNG ZUR BEKÄMPFUNG ODER VERMEIDUNG VON BRÄNDEN IM INNEREN, AN DER OBERFLÄCHE ODER IN DER UMGEBUNG EINES ELEKTROCHEMISCHEN ENERGIESPEICHERS**
PROCESS AND DEVICE FOR FIRE FIGHTING OR PREVENTION INSIDE, ON THE SURFACE OF OR IN THE AREA SURROUNDING AN ELECTROCHEMICAL ENERGY STORAGE DEVICE
PROCÉDÉ ET DISPOSITIF POUR LA PRÉVENTION D'UN INCENDIE DANS, À LA SURFACE OU DANS L'ENVIRONNEMENT D'UNE BATTERIE ELECTROCHIMIQUE

(30) Priorität: 08.11.2010 DE 102010050742
(43) Veröffentlichungstag der Anmeldung: 18.09.2013
(73) Patentinhaber: Li-Tec Battery GmbH, 01917 Kamenz (DE)
(72) Erfinder: SCHAEFER, Tim, 99768 Harztor (DE)
(74) Vertreter: JENSEN & SON
(86) Internationale Anmeldenummer: PCT/EP2011/005475
(87) Internationale Veröffentlichungsnummer: WO 2012/062422

(56) Entgegenhaltungen:
- EP-A1- 1 913 978
- WO-A1-03/066169
- WO-A1-2009/016168
- DE-A1-102008 002 103
- DE-U1-202008 007 663
- JP-A- 5 317 440
- KR-A- 20080 064 916

## Beschreibung

Die vorliegende Erfindung betrifft ein Verfahren und eine Vorrichtung zur Bekämpfung oder Vermeidung von Bränden im Inneren, an der Oberfläche oder in der Umgebung eines elektrochemischen Energiespeichers.

Brände im Zusammenhang mit elektrochemischen Energiespeichern, insbesondere im Zusammenhang mit elektrochemischen Energiespeichern auf der Basis von Lithium, sind eine große Herausforderung für die mit der Bekämpfung oder Vermeidung solcher Brände befassten oder beauftragten Beteiligten wie beispielsweise für die Hersteller, Händler oder Rettungsdienste.

Der vorliegenden Erfindung liegt die Aufgabe zugrunde, ein Verfahren und eine Vorrichtung zur Bekämpfung oder Vermeidung von Bränden im Inneren, an der Oberfläche oder in der Umgebung eines elektrochemischen Energiespeichers anzugeben, das eine zuverlässige Bekämpfung oder Vermeidung solcher Brände bei gleichzeitiger Minimierung von Schäden ermöglicht. Diese Aufgabe wird durch ein Verfahren oder eine Vorrichtung nach einem der unabhängigen Patentansprüche gelöst. Die Unteransprüche sollen vorteilhafte Weiterbildungen der Erfindung unter Schutz stellen.

Erfindungsgemäß ist ein Verfahren zur Bekämpfung oder Vermeidung von Bränden im Inneren, an der Oberfläche oder in der Umgebung eines elektrochemischen Energiespeichers vorgesehen, bei dem eine Einrichtung daraufhin wirkt, dass die Konzentration eines Inertgases oder eines Gemisches aus Inertgasen im Inneren, an der Oberfläche oder in der Umgebung des elektrochemischen Energiespeichers nicht unter einem vorgegebenen Wert sinkt.

Des weiteren ist erfindungsgemäß eine Vorrichtung zur Bekämpfung oder Vermeidung von Bränden im Inneren, an der Oberfläche oder in der Umgebung eines elektrochemischen Energiespeichers vorgesehen, die eine Einrichtung aufweist, die vorgesehen ist, darauf hinzuwirken, dass die Konzentration eines Inertgases oder eines Gemisches aus Inertgasen im Inneren, an der Oberfläche oder in der Umgebung des elektrochemischen Energiespeichers nicht unter einen vorgegebenen Wert sinkt.

Unter einem Inertgas ist in diesem Zusammenhang ein Gas oder ein Gemisch von Gasen zu verstehen, das geeignet ist, einen Brand zu vermeiden oder zu bekämpfen, vorzugsweise, indem das Inertgas einen chemischen Reaktionspartner, der für das Entstehen oder Fortbestehen eines Brandes förderlich oder notwendig ist, aus dem Brandbereich verdrängt oder eliminiert. Bevorzugte Beispiele für solche Inertgase sind die Gase Argon, Stickstoff, Kohlendioxyd oder Mischungen einiger dieser Gase, wie beispielsweise Inergen® oder Argonite®.

Grundsätzlich sind alle Gase als Inertgase in diesem Zusammenhang geeignet, die chemisch mit den Brandgut nicht reagieren und die in der Lage sind mögliche Reaktionspartner des Brandgutes aus dem Brandbereich zu verdrängen. Inergen® ist ein Markenname für ein Gemisch aus Stickstoff, Argon und Kohlendioxyd das als Löschmittel zur Brandbekämpfung oder als Schutzgas zur aktiven Brandvermeidung eingesetzt wird. Inergen besteht zu 52 Vol.-% aus Stickstoff, zu 40 Vol.-% aus Argon und 8 Vol.-% aus Kohlendioxyd (http://de.wikipedia.org/wiki/Inergen).

Alle Bestandteile von INERGEN® - Argon, Stickstoff und Kohlendioxid - sind natürlichen Ursprungs. Argon und Stickstoff werden aus der Umgebungsatmosphäre, Kohlendioxid aus natürlichen Gasquellen gewonnen. Nach dem Löschen gelangen sie unverändert wieder in die Atmosphäre, ohne die Umwelt zu belasten. INERGEN® erstickt Feuer durch Sauerstoffverdrängung und gewährleistet durch den Anteil Kohlendioxid gleichzeitig die Versorgung des menschlichen Körpers mit Sauerstoff.

Der 8 Vol.%-ige CO2-Anteil im Löschmittel ergibt im gefluteten Raum eine Konzentration von 2,5 - 5,0 Vol.%, je nach Brandrisiko und Löschmittelmenge. Dieser geringe Prozentsatz beeinflusst die Atmungssteuerung im menschlichen Körper, sodass das Mindersauerstoffangebot im Löschbereich - zur Feuerlöschung reduziert auf 14 Vol.% bis 10 Vol.% - durch eine automatische Erhöhung des Atmungstaktes (Volumens) ausgeglichen wird. Die Sauerstoffmenge, die in unseren Gehirnzellen zur Sicherstellung der wichtigen Körperfunktionen ankommt, bleibt praktisch unverändert - auch bei bewusstlosen Personen. INERGEN® ist also ein Gaslöschmittel, das den menschlichen Organismus nicht beeinträchtigt. Es löscht vollkommen rückstandsfrei und hundertprozentig umweltneutral (http://www.totalwalther.de/inergen_loeschanlagen.htm).

Das Edelgas Argon ist mit einer Dichte von 1,784 kg/cm³ bei 0 °C und 1013 hPa schwerer als Luft. Es ist chemisch sehr reaktionsträge (inert), und es ist das billigste unter den Edelgasen und in großen Mengen verfügbar, so dass es in vielen Bereichen industrielle Verwendung findet. Argon wird als Schutzgas bevorzugt verwendet, wenn Stickstoff als Schutzgas nicht verwendet werden kann, beispielsweise bei Verfahren mit Metallen, die mit Stickstoff bei hohen Temperaturen chemisch reagieren. Argon ist nicht giftig und wird sogar als Lebensmittelzusatzstoff (E938) als Treib- und Schutzgas vorzugsweise bei der Verpackung von Lebensmitteln und bei der Weinherstellung verwendet. Argon kann auf Grund seiner erstickenden Wirkung als Gasförmiges Löschmittel eingesetzt werden und wird vorwiegend für den Objektschutz, vor allem bei elektrischen und EDV-Anlagen verwendet (http://de.wikipedia.org/wiki/Argon).

Stickstoff ist ein farbloses und ungiftiges Gas, das mit einer Dichte von 1,250 kg/cm³ bei 0 °C schwerer ist als Luft und bei 77,36 Kelvin siedet. Molekularer Stickstoff ist mit 78 % Hauptbestandteil der natürlichen Atemluft. Stickstoff ist wie Argon als Lebensmittelzusatzstoff, beispielsweise als Treibgas, Packgas oder Gas zum aufschlagen von Sahne unter der Bezeichnung E941 zugelassen. Stickstoff dient als Schutzgas, unter anderem beim Schweißen und als Lampen-Füllgas. Die inerten Eigenschaften des Stickstoffs wirken sich hier vorteilhaft aus (http://de.wikipedia.org/wiki/Stickstoff).

Kohlendioxyd, auch Kohlenstoffdioxyd, ist ein unbrennbares sich erst oberhalb 2 000 °C in Kohlenmonoxyd und Sauerstoff aufspaltendes, farb- und geruchloses Gas, das sich gut in Wasser löst. Mit basischen Metalloxyden oder Metallhydrooxyden bildet es zwei Arten von Salzen, die als Karbonate beziehungsweise als Hydrogencarbonate bezeichnet werden (http://de.wikipedia.org/wiki/Kohlenstoffdioxid). Kohlendioxyd ist ein natürlicher Bestandteil der Atemluft, in der es mit einer mittleren Konzentration von 0,038 % vorkommt. Kohlendioxyd wird wegen seiner Sauerstoff verdrängenden Eigenschaft zu Feuerlöschzwecken, vor allem in Handfeuerlöschern und in automatischen Löschanlagen verwendet.

Als Bestandteil des Inertgases Inergen® bewirkt Kohlendioxyd, dass Inergen auch zur Brandbekämpfung und Brandvermeidung in solchen Räumen verwendet werden kann, in denen sich Menschen aufhalten. Kohlendioxyd wirkt dabei steigernd auf die Atemfrequenz der Menschen unter Sauerstoffmangel, so dass Menschen in mit Inergen gefluteten Räumen auch bei Sauerstoffkonzentrationen überleben können, die nur knapp über 10 Vol.-% liegen. Da viele Brände bei derartig geringen Sauerstoffkonzentrationen bereits erlöschen oder gar nicht erst entstehen, ist eine Brandvermeidung oder Brandbekämpfung auf der Grundlage von Inergen häufig einer Brandbekämpfung mit anderen Schutzgasen vorzuziehen, weil hierdurch Gefahren für beteiligte Menschen verringert werden können.

Argonite® ist ein Markenname für ein Gemisch aus ca. 50% Argon und 50 % Stickstoff. Im Gegensatz zu Inergen enthält Argonite keine Beimischung von Kohlendioxyd was zur Folge hat, dass die möglicher Weise lebenserhaltenden Wirkungen der Kohlendioxydbeimischung in Inergen bei Verwendung von Argonite nicht eintreten, was jedoch auch die gelegentlich vorteilhafte Folge hat, das unerwünschte Auswirkungen auf Lebewesen oder chemische Reaktionen mit einer Kohlendioxydbeimischung bei Verwendung von Argonite nicht zu erwarten sind.

Neben den bereits genannten Inertgasen wie Argon oder Stickstoff oder Gemischen aus diesen Gasen wie Inergen oder Argonite, die teilweise Beimischungen, vorzugsweise aus Kohlendioxyd enthalten können, kommen als Inertgase im Sinne der vorliegenden Erfindung auch weitere unter Normalbedingungen meist gasförmige Verbindungen in Betracht, die brandhemmende, brandvermeidende oder erstickende Wirkung haben.

Hierzu gehört beispielsweise auch das Fluoroform oder dazu analoge Haloforme, in denen der Fluoranteil durch ein anderes Halogen ersetzt ist. Fluoroform hat die chemische Formel CHF₃ und wird bei verschiedenen Anwendungen als Feuerlöschmittel verwendet, wozu es wegen seiner allgemein geringen Toxizität seiner geringen chemischen Reaktivität und seiner hohen Dichte geeignet erscheint. Fluoroform ist unter dem Handelsnamen FE-13 der Firma DuPont im Handel erhältlich.

Weiterhin kommt im Zusammenhang mit der vorliegenden Erfindung auch das Inertgas 1,1,1,2,3,3,3-Heptafluorpropan in Betracht, das auch unter den Handelsnamen HFC-20720 oder HFC-227ea bekannt ist. Es handelt sich hier um ein geruchloses und farbloses gasförmiges Halocarbon. Diese Verbindung ist als gasförmiges Feuerlöschmittel gebräuchlich. Das Löschmittel eignet sich vorzugsweise zur Bekämpfung von Bränden in den Bereichen von Datenverarbeitungs- und Telekommunikationsanlagen. Seine Löschwirkung tritt vorzugsweise bei Konzentrationen zwischen 6,25 Vol.-% und 9 Vol.-% ein. Unterhalb einer Konzentration von 9 Vol.-% erlaubt die US Umweltbehörde die Verwendung dieses Gases auch in Räumen, in denen sich Menschen befinden. Bei sehr hohen Temperaturen zersetzt sich Heptanfluorpropan allerdings unter Bildung von Fluorwasserstoff.

Eine weitere Verbindung die im Zusammenhang mit der vorliegenden Erfindung als Inertgas eingesetzt werden kann ist das Bromtrifluormethan. Bromtrifluormethan erstickt Verbrennungen bereits bei einer Konzentration von 6 %.

Weiterhin kommt als tntergas im Zusammenhang mit der vorliegenden Erfindung auch das Bromchlordifluormethan in Betracht, welches auch als Halon 1211 bekannt ist.

Da einige der genannten halogenhaltigen Verbindungen dem Hinblick auf Ihre umweltschädliche Wirkung bedenklich sind und teilweise in ihrer Anwendung durch gesetzliche Bestimmungen beschränkt wurden, soll hier noch eine weitere Verbindung genannt werden, die unter dem Handelsnamen Novec 1230 bekannt ist. Es handelt sich um ein Produkt der Firma 3M. Die Dichte von Novec 1230 beträgt 1,723 g/cm³; das Gas ist somit schwerer als Luft. Die Verbindung liegt bei Normalbedingungen als Flüssigkeit vor, weshalb sie auch in flüssiger Form in den Brandbereich eingebracht werden kann.

Weitere Gasförmige oder flüssige Verbindungen, die hier aus Platzgründen nicht abschließend aufgezählt werden können, sind als Inertgase oder Bestandteile von Inertgasgemischen im Zusammenhang mit der vorliegenden Erfindung geeignet.

Gemäß einer bevorzugten Ausführungsform der Erfindung ist ein Verfahren bzw. eine entsprechende Vorrichtung vorgesehen, bei dem bzw. bei der die Einrichtung wenigsten einen Sensor aufweist, der die Konzentration wenigstens eines Intergases misst. Ferner weist die Einrichtung ein vorzugsweise eine Steuereinheit auf, der die gemessenen Werte des wenigstens einen Sensors zugeführt werden. Außerdem weist die Einrichtung eine Gaszufuhreinrichtung auf, die durch die Steuereinheit gesteuert wird und ein Intergas oder ein Gemisch aus Inertgasen im Inneren, an der Oberfläche oder in der Umgebung des elektrochemischen Energiespeichers ausströmen lässt.

Mit der Messung der Konzentration wenigstens eines Inertgases ist der Vorteil verbunden, dass die entsprechenden Ausführungsformen der vorliegenden Erfindung auch in Fällen wirkungsvoll zum Einsatz kommen können, in denen die Messung der Konzentration eines gasförmigen Reaktionspartners wie beispielsweise Sauerstoff nicht möglich oder nicht zweckmäßig ist, beispielsweise weil Sauerstoff nicht der einzig mögliche Reaktionspartner bei einer Brandreaktion ist. Bei einigen bevorzugten Ausführungsformen der Erfindung ist zusätzlich zur Messung der Konzentration wenigstens eines Inertgases auch die Messung wenigstens einer Konzentration eines gasförmigen Reaktionspartners (Eduktes) einer einen möglichen Brand fördernden oder aufrecht erhaltenen chemischen Reaktion vorgesehen. Hierdurch ist eine noch bessere Steuerung der Flutung des Brandbereiches mit dem Inertgas oder den Inertgasen möglichen, wodurch vorzugsweise auch gesundheitlichen Beeinträchtigungen von Personen im Bandbereich entgegengewirkt werden kann.

Gemäß einer weiteren bevorzugten Ausführungsform der Erfindung, deren Merkmale auch mit Merkmalen anderer Ausführungsformen kombiniert werden können, wird im Zusammenhang mit dem erfindungsgemäßen Verfahren oder der erfindungsgemäßen Vorrichtung ein Inertgas aus der Gruppe Argon, Stickstoff, Kohlendioxid oder ein Gemisch aus wenigstens zwei Gasen aus dieser Gruppe eingesetzt. Anstelle eines Gemisches aus wenigstens zwei Gasen aus dieser Gruppe ist bei anderen bevorzugten Ausführungsformen der Erfindung auch ein Gemisch eines oder mehrer Gase aus dieser Gruppe mit wenigstens einem weiteren Gas vorgesehen, das nicht dieser Gruppe angehört.

Bei einer weiteren bevorzugten Ausführungsform der Erfindung, deren Merkmale auch mit Merkmalen anderer Ausführungsformen kombiniert werden können, ist es vorgesehen, dass wenigstens zeitweise eine Strömung der Gase im Inneren, an der Oberfläche oder in der Umgebung des elektrochemischen Energiespeichers erzeugt oder aufrecht erhalten wird, die zur Durchmischung dieser Gase beiträgt. Diese Ausführungsformen der Erfindung sind mit dem Vorteil verbunden, dass die Gaskonzentrationen, insbesondere die Konzentrationen der Inertgase oder anderer Gase, deren Konzentration gemessen wird, in verschiedenen Bereichen im Inneren, an der Oberfläche oder in der Umgebung des elektrochemischen Energiespeichers gleich oder näherungsweise bei gleichen Werten gehalten werden können. Hierdurch kann die Anzahl der benötigten Gassensoren gering gehalten werden, da auf Grund der Homogenität der Gaskonzentrationen wenige Messungen bereits repräsentativ für die Konzentrationen für die gesamten Bereich des elektrochemischen Energiespeichers sind.

Solche Gasströmungen werden vorzugsweise durch Gebläse erzeugt oder aufrecht erhalten, die im Inneren, an der Oberfläche oder in der Umgebung des elektrochemischen Energiespeichers vorgesehen sind.

Bei der erfindungsgemäßen Ausführungsform, deren Merkmale auch mit Merkmalen anderer Ausführungsformen kombiniert werden können, ist vorgesehen, dass wenigstens zeitweise ein Unterdruck durch Abpumpen von Gasen im Inneren, an der Oberfläche oder in der Umgebung des elektrochemischen Energiespeichers erzeugt oder aufrecht erhalten wird. Durch ein derartiges zeitweißes Abpumpen von Gasen kann eine Beschleunigung der Verdrängung oder Elimination von Reaktionsteilnehmern an chemischen Reaktionen, welche den Brand fördern, aufrecht erhalten oder beschleunigen könnten, erreicht werden, wodurch dem Brand entgegengewirkt wird. Außerdem ist nach einem zeitweißen Abpumpen von Gasen aufgrund des entstehenden Unterdrucks eine leichtere und schnellere Flutung der betroffenen Bereiche mit Inertgasen möglich, wenn die Inertgase in den Unterdruck expandieren können. Hierdurch wird die brandhemmende oder brandvermeidende Wirkung der Inertgase gefördert oder auch beschleunigt.

Bei der erfindungsgemäßen Ausführungsform deren Merkmale auch mit Merkmalen anderer Ausführungsformen kombiniert werden können, ist es vorgesehen, wenigstens ein Inertgas wenigstens zeitweise in flüssiger Form zuzuführen oder zur Zufuhr in flüssiger Form bereitzuhalten. Bei diesen Ausführungsformen ergibt sich ein weiterer Vorteil durch die kühlende Wirkung auf Grund der Verdunstung der vorzugsweise flüchtigen flüssigen Inertgase, insbesondere dann, wenn die latente Wärme des der Verdunstung zu Grunde liegenden Phasenübergangs möglichst hoch ist. Die Injektion eines oder mehrer Inertgase in flüssiger Form wird vorzugsweise mit einem vorherigen Abpumpen von Gasen im Inneren, an der Oberfläche oder in der Umgebung des elektrochemischen Energiespeichers kombiniert. Durch diese Maßnahme ist eine besonders wirksame Injektion von Inertgasen in flüssiger Form in den zu schützenden Bereich nötig, weil der herrschende Unterdruck die Ausbreitung und Verdunstung der Inertgase fördert.

Bei einer weiteren bevorzugten Ausführungsform der Erfindung, deren Merkmale auch mit Merkmalen anderer Ausführungsformen kombiniert werden können, ist es vorgesehen, dass der vorgegebene Wert der Konzentration eines Inertgases oder eines Gemisches aus Inertgasen in Abgängigkeit von einer im Inneren, an der Oberfläche oder in der Umgebung des elektrochemischen Energiespeichers gemessenen Temperatur bestimmt oder verändert wird.

Bei einer weiteren Ausführungsform der Erfindung, deren Merkmale auch mit Merkmalen anderer Ausführungsformen kombiniert werden können, ist es vorgesehen, dass der vorgegebene Wert der Konzentration eines Inertgases oder eines Gemisches aus Inertgasen in Abhängigkeit von einer im Inneren, an der Oberfläche oder in der Umgebung des elektrochemischen Energiespeichers gemessenen oder beobachteten Stoffkonzentration bestimmt oder verändert wird. Bevorzugte Stoffe, deren Konzentration hierbei gemessen oder beobachtet wird, sind potentielle Edukte (Reaktionsteilnehmer) brandfördernder chemischer Reaktionen.

Die vorliegende Erfindung wird im Folgenden anhand bevorzugter Ausführungsbeispiele und mit Hilfe von Figuren näher beschrieben.

Dabei zeigt
- Fig. 1: in schematischer Weise ein erstes bevorzugtes Ausführungsbeispiel der Erfindung;
- Fig. 2: in schematischer Weise ein zweites bevorzugtes Ausführungsbeispiel der Erfindung;
- Fig. 3: in schematischer Weise ein drittes bevorzugtes Ausführungsbeispiel der Erfindung und
- Fig. 4: in schematischer Weise ein viertes bevorzugtes Ausführungsbeispiel der Erfindung.

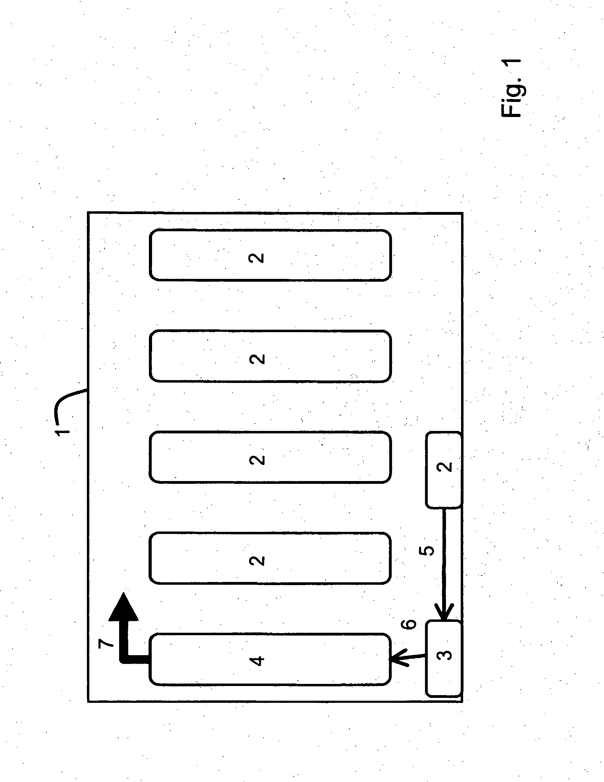

Das in Figur 1 schematisch gezeigte Ausführungsbeispiel eines erfindungsgemäßen elektrochemischen Energiespeichers weist neben einer Mehrzahl von galvanischen Elementen 2 in einem Gehäuse 1 einen Sensor 2 auf, dessen Messergebnisse 5 einer Steuereinheit 3 zugeführt werden, die ihrerseits Steuersignale 6 an eine Gaszufuhreinrichtung 4 sendet, um diese in Abhängigkeit von den gemessenen Sensordaten zu steuern.

Die Gaszufuhreinrichtung weist vorzugsweise auch einen Gasspeicher auf. Soweit dies nicht der Fall ist, wird das Gas von außen über eine in den Figuren nicht dargestellte Gaszuleitung zugeführt. Bei dem Sensor 2 handelt es sich vorzugsweise um einen Gassensor zur Messung der Konzentration eines Inertgases oder mehrerer Inertgase in dem Gehäuse 1. Bei anderen Ausführungsbeispielen der Erfindung können auch mehrere unterschiedliche oder teilweise gleichartige Sensoren 2 vorgesehen sein, die an unterschiedlichen Orten gleiche physikalische Größen, vorzugsweise Gaskonzentrationen oder Partialdrücke von Gasen, oder unterschiedliche physikalische Größen messen, wie beispielsweise die Konzentrationen von Inertgasen, die Konzentrationen von Reaktanden (Indukten) von chemischen Reaktionen, die am Brand beteiligt sein können oder Temperaturen an unterschiedlichen Orten innerhalb des Gehäuses 1. Die Steuereinheit 3 bestimmt mit Hilfe der Steuersignale 6 wann und in welcher Weise die Gaszufuhreinrichtung 4 ein Inertgas oder mehrere Inertgase in das Gehäusevolumen 7 flutet.

Die Flutung von Gasen, vorzugsweise von Inertgasen in Raumbereiche kann dabei mit "Gasen" im flüssigen oder gasförmigen Aggregatzustand geschehen. Falls ein Gas im flüssigen Zustand eingebracht wird ist die Bezeichnung Gas durch die Annahme gerechtfertigt, dass es sich dabei vorzugsweise um leicht flüchtige Flüssigkeiten handelt, die bei den im Fall der Flutung herrschenden Bedingungen (Druck, Temperatur, etc.) schnell und zwar vollständig oder wenigstens überwiegend in den gasförmigen Aggregatzustand übergehen.

Soweit dabei Substanzen Verwendung finden, bei denen der Übergang von der flüssigen in die gasförmge Phase mit der Aufnahme erheblicher Wärmemengen einhergeht, ist dies mit dem Vorteil verbunden, dass die hiermit verbundene Abkühlung zusätzlich brandhemmend oder brandvermeidend auf die betroffenen Raumbereiche wirkt, indem den potentiellen Reaktionsteilnehmern einer einen Brand auslösenden oder unterhaltenden chemischen Reaktion Energie entzogen wird, wodurch die effektive Aktivierungsenergie dieser Reaktionen womöglich erheblich erhöht wird.

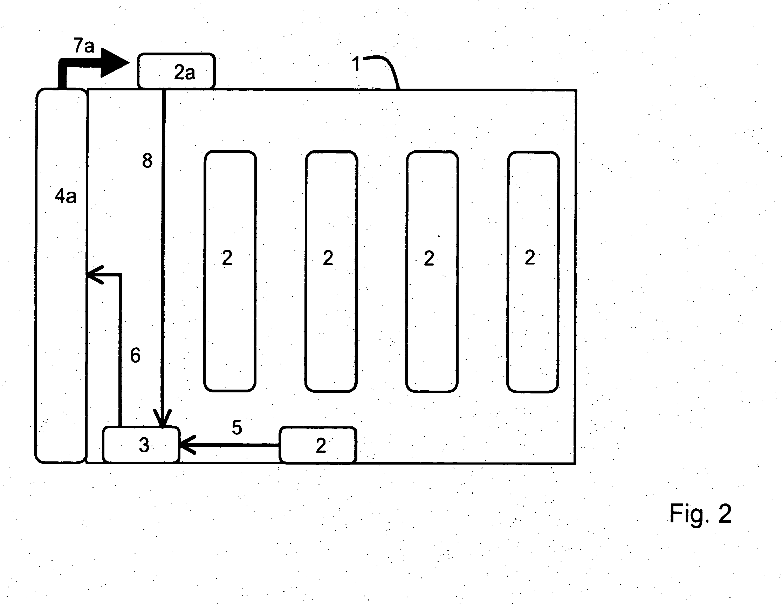

Bei dem in Figur 2 gezeigten Ausführungsbeispiel der Erfindung befindet sich die Gaszufuhreinrichtung 4a an der Außenfläche des Gehäuses 1, wodurch eine Flutung 7a mit Inertgasen im Bereich außerhalb des Gehäuses 1 möglich ist. Damit diese Flutung 7a in Abhängigkeit von Messwerten gesteuert werden kann, ist im Außenbereich des Gehäuses 1 ein zusätzlicher Sensor 2a vorgesehen, dessen Messdaten 8 der Steuereinrichtung 3 zugeführt werden. Der in diesem Ausführungsbeispiel ebenfalls vorhandene Sensor 2 innerhalb des Gehäuses 1 dient der Steuerung einer in dieser Figur nicht dargestellten Flutung in das Gehäuseinnere durch eine im Gehäuse angebrachte Gaszufuhreinrichtung oder durch die außen angebrachte Gaszufuhreinrichtung 4a, wobei dann eine entsprechende Möglichkeit zur Flutung mit Inertgasen in das Gehäuse 1 vorgesehen wäre.

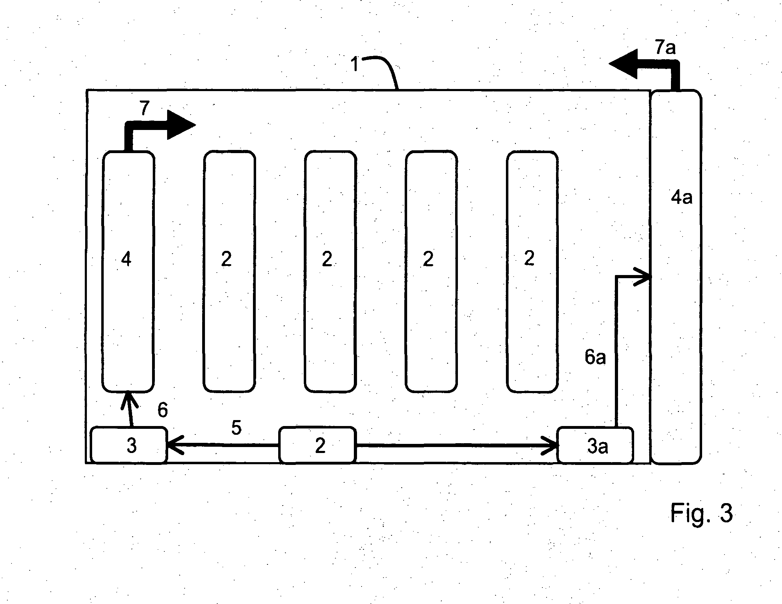

Eine derartige Kombination der Möglichkeiten der Ausführungsbeispiele der Figuren 1 und 2 zeigt die Figur 3, wobei sowohl im Inneren des Gehäuses 1 eine Gaszufuhreinrichtung 4 zur Flutung 7 des Gehäuseinneren mit Inertgasen als auch eine außerhalb des Gehäuses angebrachte Gaszufuhreinrichtung 4a zur Flutung 7a des Bereichs außerhalb des Gehäuses vorgesehen ist. Die Gaszufuhreinrichtungen 4 und 4a werden in diesem Fall durch die Steuereinheiten 3 bzw. 3a gesteuert, welche ihre Messdaten von der in der Figur 3 gezeigten einzigen Sensoreinrichtung 2 beziehen. Auch hier kann je nach Anwendungssituation eine Variante vorteilhaft sein, bei der eine Mehrzahl von Sensoreinrichtungen 2 im Gehäuse und außerhalb des Gehäuses verteilt angeordnet sind.

Diese Ausführungsbeispiele zeigen insbesondere, wie ein Brand im Innern, an der Oberfläche oder in der Umgebung eines elektrischen Energiespeichers mit Mitteln gehemmt oder vermieden werden kann, die in oder an dem elektrochemischen Energiespeicher untergebracht sind und deshalb leicht mit diesem zusammen gewechselt oder ausgetauscht werden können. Im Hinblick auf Anwendungen wie beispielsweise elektrische Straßenfahrzeuge, bei denen ein häufiger Wechsel oder Austausch von elektrochemischen Energiespeichern teilweise geplant ist, stellt dies einen Vorteil dar.

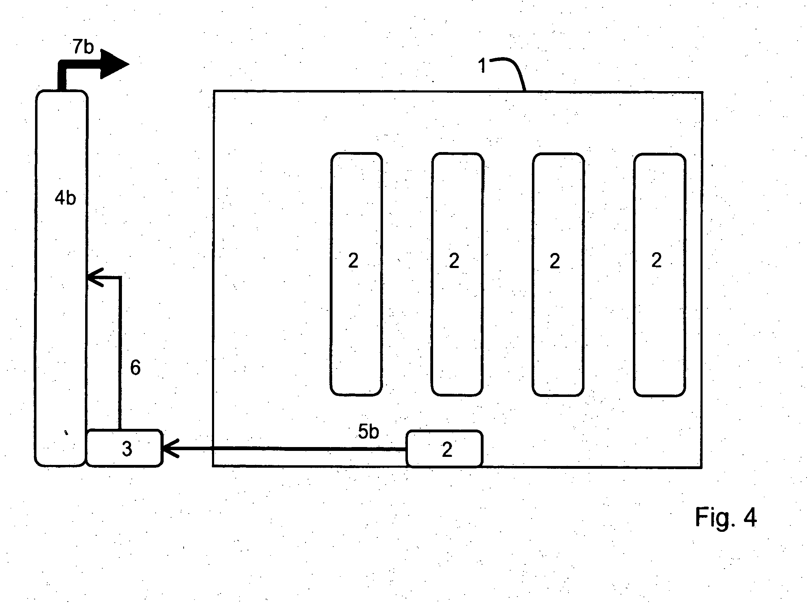

Figur 4 zeigt demgegenüber ein weiteres Ausführungsbeispiel der Erfindung, bei dem die Gaszufuhreinrichtung und die Steuereinheit zusammen außerhalb des Gehäuses 1 angeordnet sind. Dieses Ausführungsbeispiel zeigt die Möglichkeit von Inertgaslöschanlagen, bei denen der elektrochemische Energiespeicher lediglich die Sensoreinrichtung der erfindungsgemäßen Einrichtung zur Regelung der Inertgaskonzentration beinhaltet. Die Messdaten der Sensoreinrichtung werden in diesem Beispiele vom Gehäuseinneren an die vorzugsweise stationären Löscheinrichtung bzw. an deren Steuereinheit zur weiteren Verarbeitung weitergeleitet.

## Patentansprüche

1. Verfahren zur Bekämpfung oder Vermeidung von Bränden im Inneren, an der Oberfläche oder in der Umgebung eines elektrochemischen Energiespeichers, bei dem eine Einrichtung darauf hinwirkt, dass die Konzentration wenigstens eines Inertgases oder eines Gemisches aus Inertgasen im Inneren, an der Oberfläche oder in der Umgebung des elektrochemischen Energiespeichers nicht unter einen vorgegebenen Wert sinkt, **dadurch gekennzeichnet, dass** wenigstens zeitweise ein Unterdruck durch Abpumpen von Gasen im Inneren, an der Oberfläche oder in der Umgebung des elektrochemischen Energiespeichers erzeugt oder aufrechterhalten wird, in welchen Unterdruck wenigstens ein in flüssiger Form injiziertes Inertgas oder Gemisch aus Inertgasen durch Verdunstung unter Wärmeaufnahme expandieren kann.

2. Verfahren nach Anspruch 1, bei dem die Einrichtung
- wenigstens einen Sensor aufweist, der die Konzentration wenigstens eines Inertgases misst,
- eine Steuereinheit aufweist, der die gemessenen Werte des wenigstens einen Sensors zugeführt werden, und
- eine Gaszufuhreinrichtung aufweist, die, gesteuert durch die Steuereinheit, ein Inertgases oder ein Gemisch aus Inertgasen im Inneren, an der Oberfläche oder in der Umgebung des elektrochemischen Energiespeichers ausströmen lässt.

3. Verfahren nach einem der vorhergehenden Ansprüche, bei dem ein Inertgas aus der Gruppe Argon, Stickstoff, Kohlendioxid oder ein Gemisch aus wenigstens zwei Gasen aus dieser Gruppe oder ein Gemisch aus wenigstens einem Gas aus dieser Gruppe mit wenigstens einem anderen Gas, vorzugsweise mit wenigstens einem Inertgas, eingesetzt und die Konzentration wenigstens eines dieser Gase gemessen wird.

4. Verfahren nach einem der vorhergehenden Ansprüche, bei dem wenigstens zeitweise eine Strömung der Gase im Inneren, an der Oberfläche oder in der Umgebung des elektrochemischen Energiespeichers erzeugt oder aufrechterhalten wird, die zur Durchmischung dieser Gase beiträgt.

5. Verfahren nach einem der vorhergehenden Ansprüche, bei dem der vorgegebene Wert der Konzentration eines Inertgases oder eines Gemisches aus Inertgasen in Abhängigkeit von einer im Inneren, an der Oberfläche oder in der Umgebung des elektrochemischen Energiespeichers gemessenen Temperatur bestimmt oder verändert wird.

6. Verfahren nach einem der vorhergehenden Ansprüche, bei dem der vorgegebene Wert der Konzentration eines Inertgases oder eines Gemisches aus Inertgasen in Abhängigkeit von einer im Inneren, an der Oberfläche oder in der Umgebung des elektrochemischen Energiespeichers gemessenen oder beobachteten Stoffkonzentration bestimmt oder verändert wird.

7. Vorrichtung zur Bekämpfung oder Vermeidung von Bränden im Inneren, an der Oberfläche oder in der Umgebung eines elektrochemischen Energiespeichers, mit einer Einrichtung, die vorgesehen ist, darauf hinzuwirken, dass die Konzentration eines Inertgases oder eines Gemisches aus Inertgasen im Inneren, an der Oberfläche oder in der Umgebung des elektrochemischen Energiespeichers nicht unter einen vorgegebenen Wert sinkt, **dadurch gekennzeichnet, dass** wenigstens zeitweise ein Unterdruck durch Abpumpen von Gasen im Inneren, an der Oberfläche oder in der Umgebung des elektrochemischen Energiespeichers erzeugt oder aufrechterhalten wird, in welchen Unterdruck wenigstens ein in flüssiger Form injiziertes Inertgas oder Gemisch aus Inertgasen durch Verdunstung unter Wärmeaufnahme expandieren kann.

8. Vorrichtung nach Anspruch 7, die
- wenigstens einen Sensor (2, 2a) zur Messung der Konzentration wenigstens eines Inertgases aufweist,
- wenigstens eine Steuereinheit (3, 3a) aufweist, der die gemessenen Werte des wenigstens einen Sensors zugeführt werden können, und
- eine Gaszufuhreinrichtung (4, 4a, 4b) aufweist, die derart ausgestaltet ist, dass sie, gesteuert durch wenigstens eine Steuereinheit (3, 3a), ein Inertgases oder ein Gemisches aus Inertgasen im Inneren, an der Oberfläche oder in der Umgebung des elektrochemischen Energiespeichers ausströmen (7, 7a, 7b) lassen kann.

9. Vorrichtung nach einem der Ansprüche 7 oder 8, die derart ausgestaltet ist, dass ein Inertgas aus der Gruppe Argon, Stickstoff, Kohlendioxid oder ein Gemisch aus wenigstens zwei Gasen aus dieser Gruppe oder ein Gemisch aus wenigstens einem Gas aus dieser Gruppe mit wenigstens einem anderen Gas, vorzugsweise mit wenigstens einem Inertgas, eingesetzt und die Konzentration wenigstens eines dieser Gase gemessen werden kann.

10. Vorrichtung nach einem der Ansprüche 7 bis 9, die derart ausgestaltet ist, dass wenigstens zeitweise eine Strömung der Gase im Inneren, an der Oberfläche oder in der Umgebung des elektrochemischen Energiespeichers erzeugt oder aufrechterhalten werden kann, die zur Durchmischung dieser Gase beiträgt.

11. Vorrichtung nach einem der Ansprüche 7 bis 10, die derart ausgestaltet ist, dass der vorgegebene Wert der Konzentration eines Inertgases oder eines Gemisches aus Inertgasen in Abhängigkeit von einer im Inneren, an der Oberfläche oder in der Umgebung des elektrochemischen Energiespeichers gemessenen Temperatur bestimmt oder verändert wird.

12. Vorrichtung nach einem der Ansprüche 7 bis 11, die derart ausgestaltet ist, dass der vorgegebene Wert der Konzentration eines Inertgases oder eines Gemisches aus Inertgasen in Abhängigkeit von einer im Inneren, an der Oberfläche oder in der Umgebung des elektrochemischen Energiespeichers gemessenen oder beobachteten Stoffkonzentration bestimmt oder verändert wird.

## Claims

1. Method for fighting or preventing fires inside, on the surface or in the vicinity of an electrochemical energy storage device, wherein a device works towards ensuring that the concentration of at least one inert gas or of a mixture of inert gases inside, on the surface or in the vicinity of the electrochemical energy storage device does not fall below a preset value, **characterised in that** at least intermittently a vacuum is generated or maintained inside, on the surface or in the vicinity of the electrochemical energy storage device by pumping out gases, in which vacuum at least one inert gas or a mixture of inert gases injected in liquid form can expand by evaporation while absorbing heat.

2. Method according to claim 1, wherein the device comprises:
- at least one sensor which measures the concentration of at least one inert gas,
- a control unit to which the measured values of the at least one sensor are supplied, and
- a gas supply device which, controlled by the control unit, makes an inert gas or a mixture of inert gases flow out inside, on the surface or in the vicinity of the electrochemical energy storage device.

3. Method according to any of the preceding claims, wherein an inert gas from the group of argon, nitrogen, carbon dioxide, or a mixture of at least two gases from this group, or a mixture of at least one gas from this group with at least one other gas, preferably with at least one inert gas, is used and the concentration of at least one of these gases is measured.

4. Method according to any of the preceding claims, wherein at least intermittently a flow of the gases which contributes to the mixing of these gases is generated or maintained inside, on the surface or in the vicinity of the electrochemical energy storage device.

5. Method according to any of the preceding claims, wherein the preset concentration value of an inert gas or a mixture of inert gases is determined or changed as a function of a temperature measured inside, on the surface or in the vicinity of the electrochemical energy storage device.

6. Method according to any of the preceding claims, wherein the preset concentration value of an inert gas or a mixture of inert gases is determined or changed as a function of a material concentration measured or observed inside, on the surface or in the vicinity of the electrochemical energy storage device.

7. Apparatus for fighting or preventing fires inside, on the surface or in the vicinity of an electrochemical energy storage device, comprising a device which is provided to work towards ensuring that the concentration of an inert gas or of a mixture of inert gases inside, on the surface or in the vicinity of the electrochemical energy storage device does not fall below a preset value, **characterised in that** at least intermittently a vacuum is generated or maintained inside, on the surface or in the vicinity of the electrochemical energy storage device by pumping out gases, in which vacuum at least one inert gas or of a mixture of inert gases injected in liquid form can expand by evaporation while absorbing heat.

8. Apparatus according to claim 7, comprising
- at least one sensor (2, 2a) for measuring the concentration of at least one inert gas,
- at least one control unit (3, 3a) to which the measured values of the at least one sensor can be supplied, and
- a gas supply device (4, 4a, 4b) which is designed such that, controlled by the at least one control unit (3, 3a), it can make an inert gas or a mixture of inert gases flow out inside, on the surface or in the vicinity of the electrochemical energy storage device (7, 7a, 7b).

9. Apparatus according to claim 7 or 8, which is designed such that an inert gas from the group of argon, nitrogen, carbon dioxide, or a mixture of at least two gases from this group, or a mixture of at least one gas from this group with at least one other gas, preferably with at least one inert gas, can be used and the concentration of at least one of these gases can be measured.

10. Apparatus according to any of claims 7 to 9, which is designed such that at least intermittently a flow of the gases which contributes to the mixing of these gases can be generated or maintained inside, on the surface or in the vicinity of the electrochemical energy storage device.

11. Apparatus according to any of claims 7 to 10, which is designed such that the preset concentration value of an inert gas or a mixture of inert gases is determined or changed as a function of a temperature measured inside, on the surface or in the vicinity of the electrochemical energy storage device.

12. Apparatus according to any of claims 7 to 11, which is designed such that the preset concentration value of an inert gas or a mixture of inert gases is determined or changed as a function of a material concentration measured or observed inside, on the surface or in the vicinity of the electrochemical energy storage device.

## Revendications

1. Procédé de lutte ou de prévention d'incendie à l'intérieur, sur la surface ou dans l'environnement d'un dispositif de stockage d'énergie électrochimique, selon lequel un dispositif coopère pour que la concentration d'au moins un gaz inerte ou un mélange de gaz inertes à l'intérieur, sur une surface ou dans l'environnement du dispositif de stockage d'énergie électrochimique ne soit pas inférieure à une valeur prédéfinie, **caractérisé en ce qu'**au moins temporairement une dépression est produite ou maintenue par pompage des gaz à l'intérieur, sur la surface ou dans l'environnement du dispositif de stockage d'énergie électrochimique, dans ladite dépression au moins un gaz inerte injecté sous la forme liquide ou un mélange de gaz inertes puisse se dilater par évaporation par absorption thermique.

2. Procédé selon la revendication 1, le dispositif présentant :
- au moins un capteur qui mesure la concentration d'au moins un gaz inerte
- une unité de commande à laquelle sont délivrées les valeurs mesurées dudit capteur, et
- un dispositif d'alimentation en gaz qui, commandé par l'unité de commande, fait circuler un gaz inerte ou un mélange de gaz inertes à l'intérieur, sur la surface ou dans l'environnement du dispositif de stockage d'énergie électrochimique.

3. Procédé selon l'une quelconque des revendications précédentes, un gaz inerte du groupe argon, azote, dioxyde de carbone ou un mélange d'au moins deux gaz dudit groupe ou un mélange d'au moins un gaz dudit groupe avec au moins un autre gaz, de préférence présentant au moins un gaz inerte, étant utilisé et la concentration d'au moins un desdits gaz étant mesurée.

4. Procédé selon l'une quelconque des revendications précédentes, au moins temporairement un écoulement des gaz étant généré ou maintenu à l'intérieur, sur la surface ou dans l'environnement du dispositif de stockage d'énergie électrochimique, ledit écoulement contribuant au mélange desdits gaz.

5. Procédé selon l'une quelconque des revendications précédentes, la valeur prédéfinie de la concentration d'un gaz inerte ou d'un mélange de gaz inertes étant déterminée ou modifiée en fonction d'une température mesurée à l'intérieur, sur la surface ou dans l'environnement du dispositif de stockage d'énergie électrochimique.

6. Procédé selon l'une quelconque des revendications précédentes, la valeur prédéfinie de la concentration d'un gaz inerte ou d'un mélange de gaz inertes étant déterminée ou modifiée en fonction d'une concentration de matière observée ou mesurée à l'intérieur, sur la surface ou dans l'environnement du dispositif de stockage d'énergie électrochimique.

7. Dispositif de lutte ou de prévention d'incendies à l'intérieur, sur la surface ou dans l'environnement d'un dispositif de stockage d'énergie électrochimique, présentant un dispositif qui est destiné à coopérer pour que la concentration d'un gaz inerte ou d'un mélange de gaz inerte à l'intérieur, sur la surface ou dans l'environnement de l'accumulateur d'énergie électrochimique ne soit pas inférieure à une valeur prédéfinie, **caractérisé en ce qu'**au moins temporairement est générée ou maintenue une dépression par pompage des gaz à l'intérieur, sur la surface ou dans l'environnement du dispositif de stockage d'énergie électrochimique, dans laquelle dépression au moins un gaz inerte injecté sous forme de liquide ou un mélange de gaz inerte peut se dilater par évaporation par absorption thermique.

8. Dispositif selon la revendication 7,
- présentant au moins un capteur (2, 2a) destiné à mesurer la concentration d'au moins un gaz inerte
- présentant au moins une unité de commande (3, 3a) à laquelle peuvent être délivrées les valeurs mesurées dudit capteur, et
- présentant un dispositif d'alimentation en gaz (4, 4a, 4b) qui est conçu de telle manière qu'il puisse, commandé par au moins une unité de commande (3, 3a), faire circuler (7, 7a, 7b) un gaz inerte ou un mélange de gaz inertes à l'intérieur, sur la surface ou dans l'environnement de l'accumulateur d'énergie électrochimique.

9. Dispositif selon l'une quelconque des revendications 7 ou 8, qui est conçu de telle manière qu'un gaz inerte du groupe argon, azote, dioxyde de carbone ou un mélange d'au moins deux gaz dudit groupe ou un mélange d'au moins un gaz dudit groupe présentant au moins un autre gaz, de préférence présentant au moins un gaz inerte, soit utilisé et que la concentration d'au moins un desdits gaz soit mesurée.

10. Dispositif selon l'une quelconque des Revendications 7 à 9, qui est conçu de telle manière qu'au moins temporairement un écoulement des gaz puisse être généré ou maintenu à l'intérieur, sur la surface ou dans l'environnement de l'accumulateur d'énergie électrochimique, ledit écoulement contribuant au mélange desdits gaz.

11. Dispositif selon l'une quelconque des revendications précédentes 7 à 10, qui est conçu de telle manière que la valeur prédéfinie de la concentration d'un gaz inerte ou d'un mélange de gaz inertes soit déterminée ou modifiée en fonction d'une température mesurée à l'intérieur, sur la surface ou dans l'environnement de l'accumulateur d'énergie électrochimique.

12. Dispositif selon l'une quelconque des revendications 7 à 11, qui est conçu de telle manière que la valeur prédéfinie de la concentration d'un gaz inerte ou d'un mélange de gaz inertes doit déterminée ou modifiée par une concentration de matière observée ou mesurée à l'intérieur, sur la surface ou dans l'environnement de l'accumulateur d'énergie électrochimique.
